# EUROPEAN PATENT APPLICATION

(11) **EP 3 795 971 A1**
(43) Date of publication of application: **24.03.2021**
(21) Application number: 19197653.9
(22) Date of filing: 17.09.2019
(51) Int. Cl.: G01M 3/00, G01K 1/14

(54) **FLUID LEAK DETECTOR AND FLUID LEAK DETECTION METHOD BASED ON HEAT TRANSFER MEASUREMENTS**

(71) Applicant: TE Connectivity India Private Limited, Bangalore 560048 (IN)
(72) Inventor: MUTHUPANDI, Deepan Ponraj, 600089 Chennai (IN)
(74) Representative: Grünecker Patent- und Rechtsanwälte PartG mbB

(57) **Abstract**

The present invention relates to a fluid leak detector and method for detecting low leaks of fluid in a conduit based on heat transfer measurements. The fluid leak detector comprises: a collar adapted to be attached around an outer wall of the fluid conduit; a first temperature sensor arranged on a first region of an inside surface of the collar to provide a first measurement indicative of a first temperature of the outer wall at a first location of contact with the first temperature sensor; and a second temperature sensor arranged on a second region of the inside surface of the collar to provide a second measurement indicative of a second temperature of the outer wall at a second location of contact with the second temperature sensor; wherein the first and second temperature sensors are situated at different angular positions on the inside surface with respect to a longitudinal axis of the collar.

## Description

### TECHNICAL FIELD OF THE INVENTION

The present invention relates generally to detection of fluid leaks, more particularly, to detectors and methods for detecting a leak on a fluid conduit based on heat measurements.

### BACKGROUND OF THE INVENTION

Weak leaks of fluid in water supply pipe structures of residential and commercial buildings may remain undetected for a considerable amount of time as they are not easily noticeable by users or maintenance personnel. This is particularly the case of water leaks at the connection of an outlet pipe with a tap or solenoid valve of an appliance, such as a washing machine or dishwasher, to the water supply system, since these connections are in general not easily accessible and/or hidden from the view of a user. Consequently, undetected weak leaks may lead to significant waste of water per year and associated economical costs. The environmental impact caused by undetected water leaks is also important, namely, in geographical areas having low resources of water supply.

Most of water leak detectors available in the market are based on detecting the flow of fluid in a pipe by a sensing part that comes directly into contact with the flowing fluid. However, in general this type of leak detectors does not provide enough sensitivity to detect very low flows of fluid. Further, this type of detectors is invasive, since it requires direct contact between the sensing part and the fluid to be detected.

Leak detectors based on heat measurements have been proposed. For instance, patent application publication US 2019/0128762 A1 describes a technique for detecting fluid flow based on absolute values of a temperature difference between ambient temperature and temperature of the pipe. A leak may be identified by an increase of low flow over a time interval, which is determined based on temperature monitoring over a time period, such as a 24-hour interval, and analysis of the data collected over the monitoring period. However, as the temperature of the pipe and/or ambient temperature may vary based on several external parameters, such as the geographical location of the pipe system (which may affect the ambient and/or ground temperature), air temperature, time of year, and the like, and uncorrelated from each other, a calibration of the leak detecting system to each particular application or installation site might be required.

Accordingly, there is still a need for fluid leak detectors and methods for detecting fluid leakage on a conduit that can reliably detect weak fluid leaks in a simple and cost-efficient manner.

### SUMMARY OF THE INVENTION

The present invention has been made in view of the shortcomings and disadvantages of the prior art, and an object thereof is to provide a leak detection sensor and leak detection method capable of detecting weak leaks on a fluid conduit, such as after a faucet or solenoid valve, in a reliable, simple and cost-efficient manner, even in case of very low flows and which is independent from external environmental and site conditions.

This object is solved by the subject matter of the independent claims. Advantageous embodiments of the present invention are subject matter of the dependent claims.

A concept of the present invention lies in detecting leaks of fluid in a conduit by measuring differential heat transfer over the cross-section of the conduit.

According to the present invention, it is provided a fluid leak detector for detecting a leak in a fluid conduit, comprising: a collar adapted to be attached around an outer wall of the fluid conduit; a first temperature sensor arranged on a first region of an inside surface of the collar to provide a first measurement indicative of a first temperature of the outer wall at a first location of contact with the first temperature sensor; and a second temperature sensor arranged on a second region of the inside surface of the collar to provide a second measurement indicative of a second temperature of the outer wall at a second location of contact with the second temperature sensor; wherein the first and second temperature sensors are situated at different angular positions on the inside surface with respect to a longitudinal axis of the collar.

In a further development, the first and second regions of the inside surface are situated at diametrically opposed positions across the outer wall cross-section.

In a further development, the leak detection apparatus further comprises: heating means arranged on the first and second regions of said inside surface of the collar, wherein the heating means are adapted to apply a predetermined amount of heat to respective regions of the outer wall that are brought into thermal contact with the heating means when the collar is attached to the conduit.

In a further development, said heating means include: a first set of heating resistive elements arranged on the first region of the inside surface of the collar to apply said predetermined amount of heat to the respective region of contact with the outer wall; and a second set of heating resistive elements arranged on the second region of the inside surface to apply said predetermined amount of heat to the respective region of contact with the outer wall.

In a further development, said first and second sets of heating resistive elements function as the first and second temperature sensors, the heating resistive elements of the first and second sets having resistances that vary linearly with temperature over a predetermined operation temperature range by a known temperature coefficient of resistance.

In a further development, the leak detection apparatus further comprises: an electric cable integrated in the collar to supply current to the temperature sensors and/or the heating means.

In a further development, the leak detection apparatus further comprises: a processor integrated in the collar and adapted to acquire the first and second measurements from the first and second temperature sensors, to calculate a heat exchange differential between the first and second locations of the outer wall based on the first and second measurements from the first and second temperature sensors, and to issue an alarm signal indicative of a leak when the heat exchange differential is above a predetermined threshold value.

In a further development, the collar comprises first and second clamping jaws adapted to be removably installed around the fluid conduit; wherein the first region of the inside surface where the first temperature sensor is arranged is located on the first clamping jaw, and the second region of the inside surface where the second temperature sensor is arranged is located on the second clamping jaw.

In a further development, the first and second clamping jaws are coupled with each other by a spring adapted to releasably clamp the collar to the fluid conduit.

According to the present invention, it is provided a method of detecting a leak on a fluid conduit based on heat transfer measurements, the method comprising: acquiring a first measurement indicative of a first temperature of a first location of an outer wall of the fluid conduit; acquiring a second measurement indicative of a second temperature of a second location of the outer wall, wherein the first and second locations are located at different angular positions with respect to a longitudinal axis of the fluid conduit; determining a heat exchange differential between the first and second locations based on the first and second measurements; and deciding whether a fluid leak is present in the fluid conduit based on whether said heat exchange differential is above a predetermined threshold value.

In a further development, the first and second regions of the outer wall are situated at diametrically opposed positions across the outer wall cross-section.

In a further development, the method further comprises: applying a predetermined amount of heat to first and second regions of the outer wall around the first and second locations, respectively, while acquiring the first and second measurements.

In a further development, said predetermined amount of heat is applied to the first region of the outer wall by a first set of heating resistive elements and to the second region of the outer wall by a second set of heating resistive elements.

In a further development, said first and second measurements indicative of said first and second temperatures are acquired by acquiring resistance measurements of the first set of heating resistive elements and the second set of heating resistive elements, respectively, wherein the heating resistive elements of the first and second sets have resistances that vary linearly with temperature over a predetermined operation temperature range by a known temperature coefficient of resistance.

In a further development, said first and second measurements indicative of said first and second temperatures are acquired by respective temperature sensors in thermal contact with said first and second locations of the outer wall and adapted to output a digital signal indicative of said first and second temperatures, respectively.

The accompanying drawings are incorporated into and form a part of the present specification for the purpose of explaining the principles of the invention. The drawings are merely for the purpose of illustrating advantageous and alternative examples of how the invention can be made and used and are not to be construed as limiting the invention to only the illustrated and described embodiments.

### BRIEF DESCRIPTION OF THE FIGURES

Further features and advantages will become apparent from the following and more detailed description of the invention, as illustrated in the accompanying drawings, in which:
- **FIG. 1**: is a perspective view of a fluid leak detector according to an embodiment of the present invention, clamped on or attached to a fluid conduit;
- **FIG. 2**: is a perspective view of the fluid leak detector shown in Fig. 1, without the fluid conduit, from a different perspective angle;
- **FIG. 3**: is a further perspective view of the fluid leak detector illustrated in Fig. 1 with the clamping jaws opened and showing with more detail an arrangement of a temperature sensor and heating resistive elements arranged in the collar of the leak detector;
- **FIG. 4**: is a diagrammatic, sectional view of an exemplary fluid conduit with a solenoid valve and a fluid leak detector, as illustrated in Fig. 1, attached to the conduit after the solenoid valve;
- **FIG. 5**: is a perspective view of the fluid leak detector illustrated in Fig. 1, showing the upper and lower clamping jaws of the fluid leak detector in a disassembled state;
- **FIG. 6**: is a further perspective view of the fluid leak detector illustrated in Fig. 1, showing the upper clamping jaw mounted on the upper side of the conduit and surrounding half of the conduit outer perimeter; and
- **FIG. 7**: is a side view of the fluid leak detector and conduit shown in Fig. 6.

### DETAILED DESCRIPTION OF THE INVENTION

The present invention will now be more fully described hereinafter with reference to the accompanying drawings, in which exemplary embodiments of the invention are shown. The present invention may, however, be embodied in many different forms and should not be construed as limited to the embodiments set forth herein. Rather, these embodiments are provided so that the disclosure will be thorough and complete, and will fully convey the scope of the invention to those skilled in the art. Like numbers refer to like elements in the drawings throughout the specification.

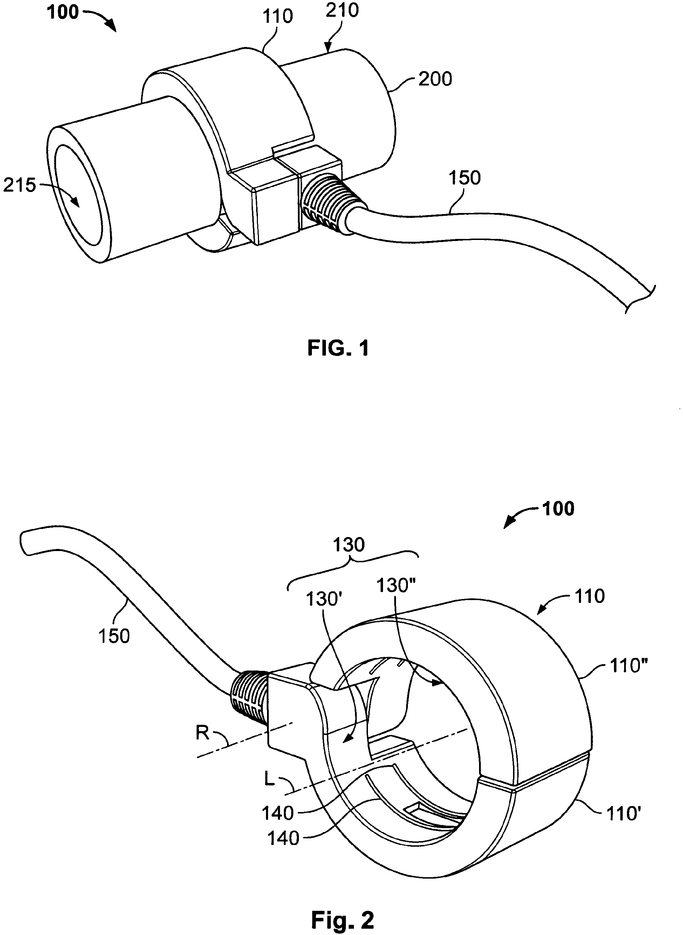

Fig. 1 is a perspective view of a fluid leak detector 100 for detecting a leak in a fluid conduit 200 according to an embodiment. The fluid leak detector 100 includes a collar 110 for being removably attached or clamped to an outer wall 210 of the conduit 200. The collar 110 may generally have an annular shape with cross-sectional dimensions suitable to fit to the outer perimeter of cylindrical pipes, such as the conduit 200, and to surround the conduit 200 outer wall 210 for securely attaching the fluid leak detector 100. However, the collar 110 may be designed with other shapes than illustrated, namely, to fit to other shapes of conduit cross-sections, such as to provide a reliable contact and fixation of the fluid leak detector 100 to the conduit, and/or may only partially surround the outer wall 210.

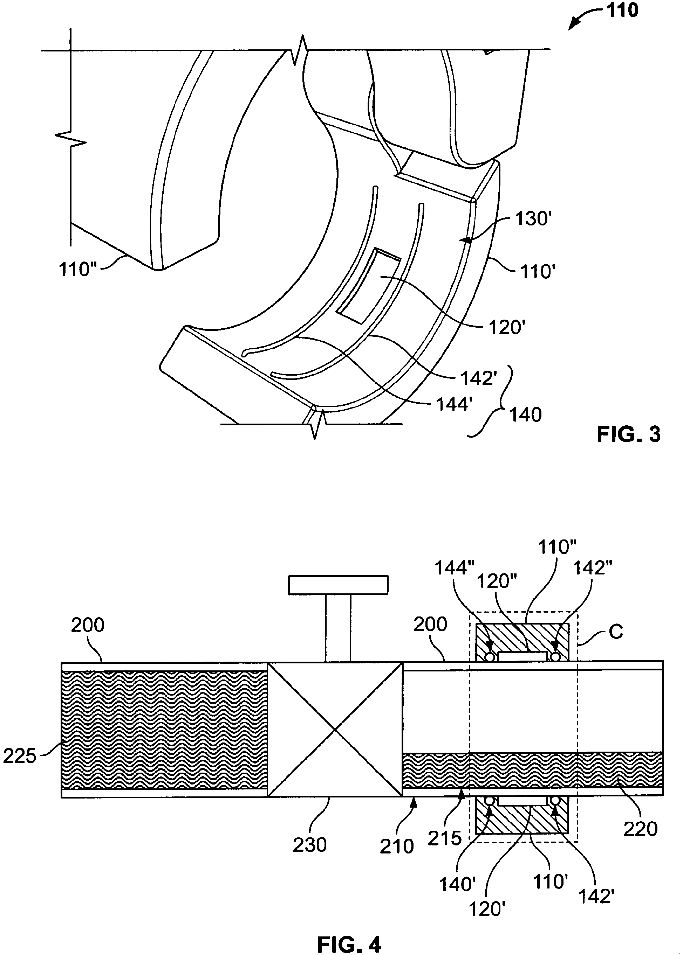

As shown in Figs. 2 and 3, in order to facilitate the attachment to and/or detachment from the conduit 200, the collar 110 may be comprised of two movable parts, such as two clamping jaws 110' and 110", that can be rotated with respect to each other about a rotation axis R to open and/or close the collar 110. The clamping jaws 110' and 110" are designed to approximately split the collar 110 into two halves having a similar perimeter and shaped so as to be respectively wrapped around an upper half and a lower half of the conduit 200 when the collar 110 is closed, thereby ensuring a firm fixation of the fluid leak detector 100 to the conduit 200.

The collar 110 serves not only as a fixation of the fluid leak detector 100 to the conduit 200 but also as a carrier of temperature sensors which are integrated in the collar 110 for providing measurements indicative of a temperature of the conduit outer wall 210 at several locations along a perimeter of the outer wall 210. Accordingly, as shown in Fig. 3, a first temperature sensor 120' may be arranged on a first region of an inside surface 130 of the collar 110 such as to establish thermal contact with a respective first location (or region) of the conduit outer wall 210 and therefore, provide a measurement indicative of the temperature of the outer wall 210 at this first location of contact with the first temperature sensor 120'. A second temperature sensor 120" may be arranged on a second region of the inside surface 130 of the collar 110, different from the first region where the first temperature sensor 120' is located, to acquire a second measurement indicative of the outer wall 210 temperature at a second location (or region) of contact with the second temperature sensor 120". The first and second temperature sensors 120', 120", and hence, the first and second regions in the collar 110, are situated on the inside surface 130 at respective angular positions with respect to the collar concentric axis L for sensing the temperature at different locations of substantially a same cross-section of the conduit 200.

In addition, the first and second temperature sensors 120', 120" are positioned sufficiently apart along the outer perimeter of the conduit 200 such as to detect a differential in the heat exchanged by the outer wall 210 with fluid flowing inside the conduit 200 at the first region of contact with the first sensor 120' and at the second region of contact with the second sensor 120". For instance, as shown in Fig. 4, the first temperature sensor 120' may be situated in the inside surface 130' of a lower part of the collar 110, i.e. the lower jaw 110', and the second temperature sensor 120" may be situated in the inside surface 130" of the upper part of the collar 110, i.e. the upper jaw 110', such as to be at diametrically opposed positions across the collar concentric axis L. Thus, in case of a weak flow on a conduit 200 that is horizontal with respect to the direction of gravity, such as illustrated in Fig. 4, or inclined by less than a given inclination angle with respect to the horizontal plane (for e.g. by a angle of less than 10°), only the temperature at the lower part of the conduit 200 will be predominantly affected by the exchange of heat with the leak fluid 220 flowing along the corresponding inner wall 215 of the conduit 200, while the temperature at upper regions of the conduit 200 that do not enter into contact with the leak fluid 220 will not be affected. Thus, by installing the fluid leak detector 100 on the conduit 200 with an orientation such as to have one of the temperature sensors 120' and 120" positioned for detecting the outer wall temperature at the lowest half of the conduit 200, with which there will be predominantly a dissipation of heat due to the flowing fluid in case of a leak, and another temperature sensor positioned at an opposed location of the outer wall 210 across the conduit 200 that is not affected by a weak flow, a reliable detection of a temperature difference caused by the cooling (or heating) effect of the weak flow may be achieved.

In order to increase the sensitivity of the fluid leak detector 100 to low leaks, a significant temperature drift due to a low flow of fluid on a lower half of the conduit 200 may be created by applying external heat at discrete locations of the conduit outer wall 210, preferably around or close to the locations of the outer wall 210 where the temperature is sensed by the temperature sensors 120. For instance, when applying a same amount of heat to regions of the outer wall 210 corresponding to the first and second locations where temperature is sensed, the temperature measured on the first and second locations will be essentially the same in case the conduit 200 is full of fluid or empty (i.e. no leak flow). In case of a leak, such as in the case shown in Fig. 4, the part 220 of the incoming fluid 225 that leaks to the other side of the closed valve 230 essentially flows along a lower part of the inner wall 215 of the conduit 200 and will carry away part of the external heat applied on this region, leading to a detectable change of local temperature at the corresponding part of the outer wall 210 with respect to the upper part of the conduit 200, with which the leak fluid does not enter into contact.

The supply of external heat to specific locations of the outer wall 210 may be achieved by including heating means 140 in the fluid leak detector 100 itself. For instance, as shown in Figs. 3 and 4, the heating means 140 may be carried by the collar 110 for applying heat at different locations of the outer wall 210 and with a fixed positional relationship with respect to the temperature sensor 120', 120". The heating means 140 may be provided as heating resistive elements that are arranged on the inside surface 130 of the collar 110, close to or in the proximity of the first and second temperature sensors 120', 120", such as to enter into thermal contact with the outer wall 210 when the fluid leak detector 100 is attached to the conduit 200. The heating means 140 are preferably located close to the temperature sensors 120', 120" to apply heat near the contact regions or locations where the temperature of the outer wall 210 is to be sensed. For instance, a first set of one or more heating resistive elements, such as a pair of heating wires 142' and 144', may be provided on the lower clamping jaw 110' close to the respective temperature sensor 120'. In the configuration illustrated in Fig. 3, a heating resistive element of the pair 142' and 144' is located on each side of the temperature sensor 120' to ensure a homogeneous heat supply to the conduit 200 at the region of contact with the outer wall 210 where the temperature sensor 120' is located. A second set of heating resistive elements, such as a pair of heating wires 142" and 144", may be provided on the inside surface 130" of the collar 110 at a symmetrical location with respect to the first set, for instance, around or in the proximity of the temperature sensor 120" located in the second region of the upper part 110" of the collar 110. The heating resistive elements 142", 144" of the second set are preferably resistive wires like the first set of wires 142', 144'.

A same amount of heat may then be applied by the heating resistive elements 142', 144', 142", 144" provided on each jaw of the collar 110 on the respective regions of contact with the outer wall 210 by supplying a same heating current to the first and second sets of resistive elements from an external source (not shown). Thus, the detection of a temperature gradient between two locations across the conduit diameter due to a differential in the heat exchange caused by a low flow of fluid on the lower half of the conduit 200 may be reliably detected, even in the case of weak leaks. The heating currents may be supplied to the first and second sets of heating resistive elements 142', 144', 142", 144", via electrical wires of a cable 150 that are incorporated into the collar 110. Heating current may be supplied by connecting the fluid leak detector 100 to a power source, such as a battery for stand-alone operation. The amount of heating current applied to each set of heating resistive elements 142', 144', 142", 144" may be previously determined such as to locally apply the amount of heat enough for determining heat loss on one half of the conduit 200 due to the passage of leak fluid.

The detection of a weak leak based on a temperature differential between two locations of the outer wall 210 situated on a same cross-section C of the conduit 200 has the advantage that it is not necessary to have knowledge of external parameters, such as ambient temperature, that affect both halves of the conduit 200 in the same manner, because their effect is cancelled out in the temperature differential.

Moreover, since the locations where temperature is sensed by the fluid leak detector 100 are located on the outer perimeter of a same cross-section C of the conduit 200, instead of along its longitudinal length in the direction of fluid flow, as in some state of the art leak detectors, variations of heat exchange along the longitudinal length of the conduit 200 caused by changes in the velocity of the fluid flow, inclination angle of the conduit 200, distance between the temperature sensing locations along the conduit 200, and the like, have a minimal impact in temperature measurements taken along the perimeter of the conduit cross-section. Therefore, weak flows can be reliably detected by the present invention with a minimum input of external parameters so that the fluid leak detector 100 may be used in a wide range of applications without need of in-site calibration.

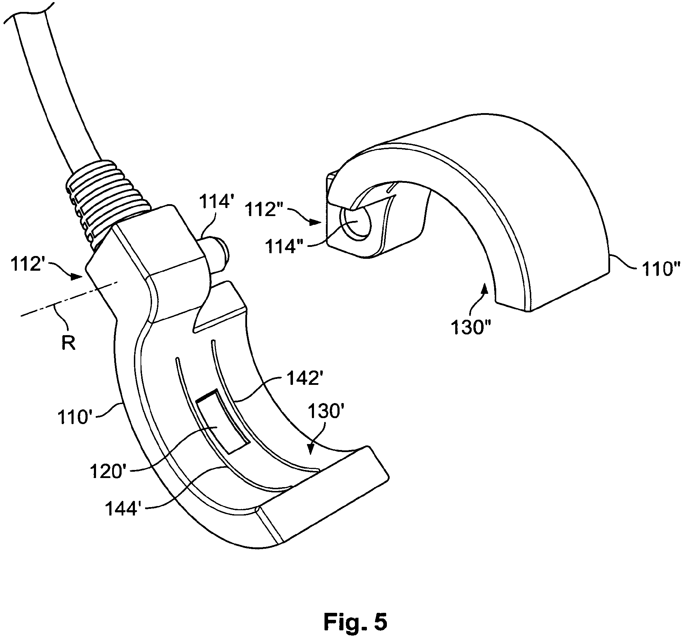

As mentioned above, the fluid leak detector 100 may be easily attached to and/or removed from the conduit 200 by designing the collar 110 with clamping jaws 110' and 110" that are mechanically coupled to each other at one end. Referring to Fig. 5, each of the clamping jaws 110' and 110" may include, at one end, respective coupling members 112' and 112" having mating features, such as a mating pin 114" and a mating cavity 114', respectively, for interlocking the clamping jaws 110' and 110" in a rotational movement about the lateral rotation axis R. A spring (not shown) may be loaded between the mating pin 114" and mating cavity 114' for providing a clamping force sufficient for fixing the clamping jaws 110', 110" firmly on the conduit 200 and in a releasable manner. The coupling members 112' and 112" may enclose embedded electrical connection wires or pins (not shown) suitable for transmitting electrical signals to components, such as the temperature sensors 120', 120", arranged on the clamping jaws 110' and 110" via the cable 150, and/or for supplying heating currents to the heating means arranged on each of the upper and lower clamping jaws 110", 110', described above. This configuration allows to easily fixate and/or remove the fluid leak detector 100 to the conduit 200 from a lateral side, without the need of disconnecting the conduit 200 from the pipe system and/or appliance. The use of a clamp design also allows to securely attach the fluid leak detector 100 to conduits of various pipe diameters and/or shapes, even if the shape and/or diameter of the collar does not match the pipe cross-section.

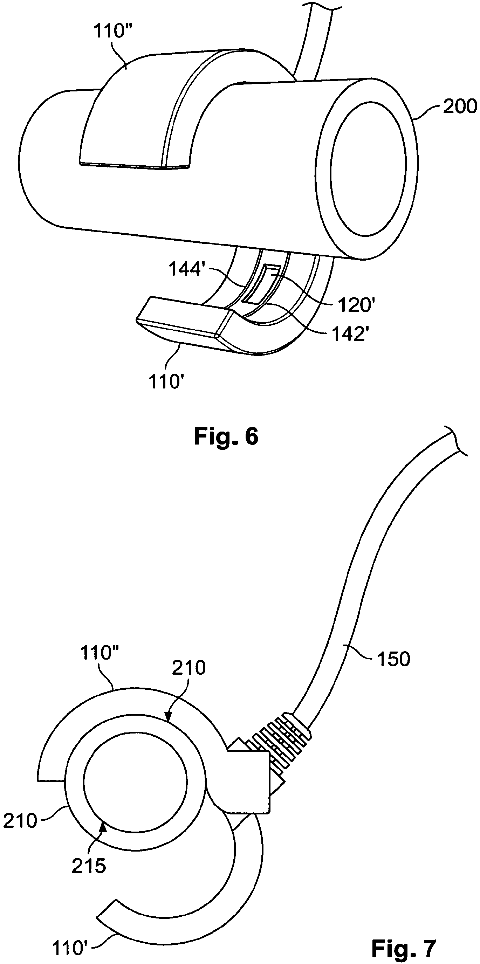

Fig. 6 is a further perspective view of the fluid leak detector 100 illustrated in Fig. 1, where the upper clamping jaw 110" mounted on the upper side of the conduit 200 follows the conduit shape and surrounds half of the perimeter of the conduit outer wall 210, thereby ensuring an optimal fixation of the fluid detector 100 to the conduit 200 and good thermal contact with the temperature sensor 120" and/or the heating resistive elements 142", 144". FIG. 7 is a side view of the fluid leak detector 100 and conduit 200 shown in Fig. 6.

The temperature sensors 120', 120" may be stand-alone sensors with a digital output for outputting a signal indicative of the temperature sensed at the temperature sensor location, and which are acquired by an external processor or computer unit. The external processor or computer unit collects the sensing signals and analyses the collected data to determine several monitoring parameters, such as a temperature differential between the temperatures sensed by the temperature sensors 120 at a same time. A threshold value may be set as an upper limit above which the detected temperature differential may be reasonably associated with a heat exchange differential caused by a low flow of fluid in the conduit 200 due to a leak. When the determined temperature difference is above the threshold value, the processor may send a notification to a user or an operator. Alternatively, the fluid leak detector 100 may include an integrated processor that collects and processes the sensed data and issues an alarm signal, such as a sound or a light signal, when a temperature differential above the threshold value is detected.

In an alternative configuration, the temperature sensors 120', 120" on the lower and upper jaws 110', 110" described above may be eliminated and the heat exchange and/or temperature differential obtained by sensing a resistance change between the sets of heating resistive elements 142', 144' and 142", 144" provided in the lower and upper jaws 110', 110", respectively. It is known that metals generally used as heating resistive elements, such as copper or nickel, have a resistance versus temperature relationship that is substantially linear over a wide operating range (between 0°C and 100°C). As the amount of resistance change in the metal wire is directly proportional to the amount of temperature change by a temperature coefficient of resistance α, usually expressed in units of Ω/(Ω·°C), that remains essentially constant over the operating range of interest, it is possible to detect a temperature difference between the two locations of the outer wall 210 being heated by the respective heating resistive elements in the lower and upper jaws 110', 110" based on a difference between the resistance of the respective heating resistive elements. For instance, by applying a same heating voltage to the set of heating resistive elements 142', 144' in the lower jaw 110' and to the set of heating resistive elements 142", 144" on the upper jaw 110", a change in the current being supplied to each set of resistive elements is indicative of a change in temperature of one of the sets with respect to the other, and therefore, of a temperature differential between the regions of the outer wall 210 with which the respective sets of heating resistive elements are in thermal contact. Thus, the first and second sets of heating resistive elements may be used for obtaining first and second resistive measurements, which are indicative of the temperature at the first and second locations of the outer wall 210, respectively.

As mentioned above, the leak detection process may be controlled by means of software or instructions running on a processor or computer unit, which perform control to acquire a first measurement from the first temperature sensor 120' that is indicative of the temperature of the outer wall 210 at the first location of contact with the first temperature sensor 120' and to acquire a second measurement from the second temperature sensor 120" that is indicative of the temperature of the outer wall 210 at the second location of contact with the second temperature sensor 120". A temperature or heat exchange differential between the first and second locations may then be determined based on the acquired first and second measurements. The processor or computer unit may then decide whether there is a leak in the conduit 200 by comparing the obtained differential with the pre-set threshold value, and in case the obtained differential is above the threshold value, issue notification data or a signal to notify a user that a leak has been detected. The leak detection process may also control a power source to supply currents to the heating means of the fluid leak detector 100 for applying a predetermined amount of heat to the first and second regions of the outer wall 210, while acquiring the first and second measurements.

Although the present invention has been described above with reference to conduits which are essentially horizontal with respect to the direction of gravity, the principles of the present invention may also be advantageously applied to conduits or pipes which are inclined by a certain angle with respect to the horizontal, as long as the leaking fluid predominantly flows in one half of the conduit such as to cause a heat exchange differential and/or temperature differential between the upper and lower halves of the conduit. For instance, the fluid leak detector 10 may be advantageously applied to conduits or pipes which have an inclination angle between -10° to + 10° with respect to the horizontal direction.

Moreover, though certain features of the above exemplary embodiments were described using terms such as "lower" and "upper", these terms are used for the purpose of facilitating the description of the respective features and their relative orientation with respect to the direction of gravity but should not be construed as limiting the claimed invention or any of its components to their use in a particular spatial orientation.

The principles of the present invention are applicable to the detection of leaks of any type of fluids, such as water or oil.

In summary, the fluid leak detector and fluid detection method of the present invention offers several advantages over the prior art. Firstly, the fluid leak detector is capable of sensing very low flow leaks due to the application of external heat at each half of the conduit 200. Secondly, the fluid leak detector 100 attachment via a collar 110 with clamping jaws allow an easy installation and attachment to the conduit to be monitored, irrespectively of the conduit orientation and without the need of disconnecting the conduit from the general fluid supply system so that it does not require removing water line pipes. Further, as both the temperature sensors as well as the heating resistive elements may be provided on the inside surface of the upper and lower clamping jaws, a secure and good thermal contact between these elements and the regions of contact with the outer wall may be ensured.

**Reference Signs**

| | |
|---|---|
| 100 | Fluid leak detector |
| 110 | Collar |
| 120', 120" | Temperature sensors |
| 130 | Inside surface of collar |
| 140 | Heating means |
| 142', 144', 142", 144" | Heating resistive elements |
| 150 | Cable |
| 110', 110" | Lower and upper clamping jaws |
| 130', 130" | Inside surface of upper and lower clamping jaws |
| 112', 112" | Coupling members |
| 114', 114' | Mating pin, mating hole |
| R | Rotation axis |
| L | Longitudinal axis |
| 200 | Fluid conduit |
| 210 | Outer wall |
| 215 | Inner wall |
| 220 | Leak fluid |
| 225 | Normal fluid |
| 230 | Valve |

## Claims

1. A fluid leak detector for detecting a leak in a fluid conduit (200), comprising:
a collar (110) adapted to be attached around an outer wall (210) of the fluid conduit (200);
a first temperature sensor (120') arranged on a first region of an inside surface (130') of the collar (110) to provide a first measurement indicative of a first temperature of the outer wall (210) at a first location of contact with the first temperature sensor (120'); and
a second temperature sensor (120") arranged on a second region of the inside surface (130") of the collar (110) to provide a second measurement indicative of a second temperature of the outer wall (210) at a second location of contact with the second temperature sensor (120");
wherein the first and second temperature sensors (120',120") are situated at different angular positions on the inside surface (130', 130") with respect to a longitudinal axis of the collar (110).

2. A leak detection apparatus according to claim 1, wherein
the first and second regions of the inside surface (130', 130") are situated at diametrically opposed positions across the outer wall (210) cross-section.

3. A leak detection apparatus according to claim 1 or 2, further comprising:
heating means (140) arranged on the first and second regions of said inside surface (130', 130") of the collar (110),
wherein the heating means (140) are adapted to apply a predetermined amount of heat to respective regions of the outer wall (210) that are brought into thermal contact with the heating means (140) when the collar (110) is attached to the conduit.

4. A leak detection apparatus according to claim 3, wherein said heating means (140) include:
a first set of heating resistive elements (142', 144') arranged on the first region of the inside surface (130') of the collar (110) to apply said predetermined amount of heat to the respective region of contact with the outer wall (210); and
a second set of heating resistive elements (142", 144") arranged on the second region of the inside surface (130") to apply said predetermined amount of heat to the respective region of contact with the outer wall (210).

5. A leak detection apparatus according to claim 3 or 4, wherein
said first and second sets of heating resistive elements (142',144', 142", 144") function as the first and second temperature sensors, the heating resistive elements of the first and second sets having resistances that vary linearly with temperature over a predetermined operation temperature range by a known temperature coefficient of resistance.

6. A leak detection apparatus according to any one of claims 3 to 5, further comprising:
an electric cable integrated in the collar (110) to supply current to the temperature sensors (120', 120") and/or the heating means (140).

7. A leak detection apparatus according to any one of claims 3 to 6, further comprising:
a processor integrated in the collar (110) and adapted to acquire the first and second measurements from the first and second temperature sensors (120', 120"; 142',144', 142", 144"), to calculate a heat exchange differential between the first and second locations of the outer wall (210) based on the first and second measurements from the first and second temperature sensors (120), and to issue an alarm signal indicative of a leak when the heat exchange differential is above a predetermined threshold value.

8. A leak detection apparatus according to any one of the preceding claims, wherein
the collar (110) comprises first and second clamping jaws (110', 110") adapted to be removably installed around the fluid conduit (200);
wherein the first region of the inside surface (130') where the first temperature sensor (120') is arranged is located on the first clamping jaw (110'), and
the second region of the inside surface (130") where the second temperature sensor (120") is arranged is located on the second clamping jaw (110").

9. A leak detection apparatus according to claim 8, wherein
the first and second clamping jaws (110', 110") are coupled with each other by a spring adapted to releasably clamp the collar (110) to the fluid conduit (200).

10. A method of detecting a leak on a fluid conduit (200) based on heat transfer measurements, the method comprising:
acquiring a first measurement indicative of a first temperature of a first location of an outer wall (210) of the fluid conduit (200);
acquiring a second measurement indicative of a second temperature of a second location of the outer wall (210), wherein the first and second locations are located at different angular positions with respect to a longitudinal axis of the fluid conduit (200);
determining a heat exchange differential between the first and second locations based on the first and second measurements; and
deciding whether a fluid leak is present in the fluid conduit (200) based on whether said heat exchange differential is above a predetermined threshold value.

11. A method according to claim 10, wherein
the first and second regions of the outer wall (210) are situated at diametrically opposed positions across the outer wall cross-section.

12. A method according to claim 10 or 11, further comprising:
applying a predetermined amount of heat to first and second regions of the outer wall (210) around the first and second locations, respectively, while acquiring the first and second measurements.

13. A method according to claim 11, wherein
said predetermined amount of heat is applied to the first region of the outer wall (210) by a first set of heating resistive elements (142', 144') and to the second region of the outer wall (210) by a second set of heating resistive elements (142", 144").

14. A method according to claim 13, wherein
said first and second measurements indicative of said first and second temperatures are acquired by acquiring resistance measurements of the first set of heating resistive elements (142', 144') and the second set of heating resistive elements (142", 144"), respectively,
wherein the heating resistive elements of the first and second sets have resistances that vary linearly with temperature over a predetermined operation temperature range by a known temperature coefficient of resistance.

15. A method according to any one of claims 10 to 13, wherein
said first and second measurements indicative of said first and second temperatures are acquired by respective temperature sensors (120) in thermal contact with said first and second locations of the outer wall (210) and adapted to output a digital signal indicative of said first and second temperatures, respectively.
